# EUROPÄISCHE PATENTSCHRIFT

(11) **EP 3 854 568 B1**
(45) Veröffentlichungstag und Bekanntmachung des Hinweises auf die Patenterteilung: **19.03.2025**
(21) Anmeldenummer: 21000011.3
(22) Anmeldetag: 18.01.2021
(51) Int. Cl.: B29C 55/06, B29C 55/28

(54) **VORRICHTUNG UND VERFAHREN ZUR MONOAXIALEN LÄNGENÄNDERUNG VON FOLIENBAHNEN**
APPARATUS AND METHOD FOR MONOAXIAL CHANGE IN THE LENGTH OF FILM WEBS
DISPOSITIF ET PROCÉDÉ DE CHANGEMENT MONOAXIAL DE LA LONGUEUR DES FEUILLES CONTINUES

(30) Priorität: 21.01.2020 DE 102020000334
(43) Veröffentlichungstag der Anmeldung: 28.07.2021
(73) Patentinhaber: HOSOKAWA ALPINE Aktiengesellschaft, 86199 Augsburg (DE)
(72) Erfinder: BAYER, Bernd, 86399 Bobingen (DE)
(74) Vertreter: Charrier Rapp & Liebau

(56) Entgegenhaltungen:
- EP-A1- 2 277 681
- EP-A2- 0 449 548
- WO-A1-2014/023282
- CN-A- 110 049 856
- DE-A1- 102013 007 669
- US-A1- 2005 202 205

## Beschreibung

Die Erfindung richtet sich auf eine Vorrichtung zur monoaxialen Längenänderung von Folienbahnen in Maschinenrichtung nach dem Oberbegriff des Anspruchs 1, eine Reckanlage nach dem Oberbegriff des Anspruchs 6, eine Blasfolienanlage zur Herstellung von Schlauchfolien nach dem Oberbegriff des Anspruchs 8 sowie ein Verfahren zur monoaxialen Längenänderung von Folienbahnen in Maschinenrichtung. Diese umfasst
mindestens einen von zwei Walzen begrenzten Bearbeitungsspalt, über den eine Folienbahn in Maschinenrichtung geführt wird, wobei die in Folientransportrichtung erste Walze eine erste Umfangsgeschwindigkeit aufweist und die in Folientransportrichtung zweite Walze eine zweite Umfangsgeschwindigkeit aufweist.

Bei der Herstellung von Folien werden Reckanlagen eingesetzt um die Dicke von Folien nach ihrer Herstellung zu reduzieren. Das Recken von Folien wird sowohl bei Schlauchfolien als auch bei Cast-Folien eingesetzt.

Eine Reckanlage besteht in der Regel aus Heizwalzen um die Folie für das Recken vorzubereiten, gefolgt von Reckwalzen, zwischen denen die Folie verstreckt wird. Dem Verstrecken können sogenannte Annealing- oder Temperwalzen folgen, hier wird die Folie einer Temperaturbehandlung unterzogen um auf die Folieneigenschaften einzuwirken. Als letztes wird die Folie mittels Kühlwalzen abgekühlt. Durch das Recken der Folienbahnen werden die Folien nicht nur in ihren geometrischen Abmessungen verändert, auch ihre Eigenschaften wie zum Beispiel Transparenz oder Festigkeit können gezielt beeinflusst werden.

Reckanlagen werden offline oder inline in Blasfolienanlagen betrieben. Das Verstrecken von Schlauchfolien kann auch inline in Blasfolienanlagen direkt nach dem Abzugswalzenpaar erfolgen oder nach dem, dem Abzugswalzenpaar folgenden Wendestangensystem.

Beim monoaxialen Verstrecken von Folienbahnen in Maschinenrichtung, auch Längsrecken genannt, tritt eine Quereinschnürung, das sogenannte Neck-in, mit gleichzeitigem Verdicken der Ränder, dem sogenannten Randaufbau, auf. Dieser Effekt ist für die Weiterverarbeitung der Folie sehr ungünstig. Nachteilig ist der Neck-in, da er den Folienherstellungsprozess in Bezug auf die geforderte Planlage für die Weiterverarbeitung der Folien erschwert. Je höher der Neck-in wird, umso schwieriger wird es, die geforderte Folienqualität bei einer wirtschaftlichen Produktion von monoaxial gereckten Folien zu erreichen. Es ergeben sich Nachteile wie hängende Folienränder und andere Planlagefehler beim Abwickeln der erzeugten Wickel. Dies führt zu einer schlechten Wickelqualität und somit zu einer schlechteren Weiterverarbeitungsfähigkeit der Folie, beispielsweise beim Bedrucken, Kaschieren oder Laminieren.

Die DE 10 2009 046 585 A1 offenbart eine Reckanlage zum Längsrecken von Folienbahnen und ein Verfahren dafür. Die Reckanlage besteht im Wesentlichen aus einer Heizvorrichtung, einem Reckwerk und einer Abkühlvorrichtung. Um das Neck-in und den Randaufbau beim Längsrecken der Folienbahn zu verringern wird eine Anpresseinrichtung in Form eine Aufliegewalze eingesetzt, die die Folienbahn an die Reckwalzen presst.

Die DE 10 2009 046 593 A1 offenbart ebenfalls eine Reckanlage zum Längsrecken von Folienbahnen und ein Verfahren dafür. Um das Neck-in und den Randaufbau zu verringern wird eine Umlenkwalze in den Reckspalt zwischen den zwei Reckwalzen des Reckwerks eingesetzt. Die Folie schnürt weniger ein.

Dem Querschrumpf bzw. der Einschnürung der monoaxial verstreckten Folie wird beim Verstrecken auch über die Temperatureinstellung der Reckwalzen entgegengewirkt, wie in der DE 10 2011 085 735 A1 offenbart. Des Weiteren kann über die Reckspaltanpassung der Einschnürung entgegengewirkt werden. Eine Reduzierung des Walzenspaltes führt zu einer Reduzierung des Neck-ins der Folie.

Um die Planlage von in Blasfolienanlagen hergestellten Folien, welche im Anschluss in Reckanlagen verstreckt werden zu verbessern, werden Dickenregelungsverfahren wie z.B. aus der DE 10 2009 033 171 A1 bekannt, eingesetzt. Es wird dabei der Randaufbau beim monoaxialen Recken in Maschinenrichtung reduziert. Dafür werden bei der Herstellung von Schlauchfolien jene Bereiche, die später die Randbereiche der flachliegenden Folie bilden, mit Dünnstellen versehen, sodass nach dem Recken ein Endprodukt mit möglichst gleichmäßiger Dicke quer zur Folienbahn entsteht. Dieses Verfahren wirkt sich auch positiv auf die Reduzierung des Querschrumpfes aus.

Die CN 110 049 856 A beschreibt eine Vorrichtung nach dem Oberbegriff des Anspruchs 1.

Der Erfindung liegt die Aufgabe zugrunde, eine Lösung zu schaffen, die es ermöglicht in Vorrichtungen zur monoaxialen Längenänderung von Folienbahnen in Maschinenrichtung Folienbahnen mit verbesserter Planlage herzustellen, indem die Quereinschnürung und damit der Randaufbau verringert wird. Dies erhöht die Qualität der hergestellten Folienwickel.

Bei einer Vorrichtung zur monoaxialen Längenänderung von Folienbahnen in Maschinenrichtung der gattungsgemäßen Art wird die Aufgabe erfindungsgemäß durch das Kennzeichen des Hauptanspruchs gelöst.

Die Lösung der Aufgabe wird erfindungsgemäß mit einer eingangs genannten Vorrichtung zur monoaxialen Längenänderung von Folienbahnen in Maschinenrichtung erreicht, bei an die luftdurchströmbare Walze eine Unterdruckquelle anschließbar und die Walze mit Unterdruck beaufschlagbar ist, wobei die luftdurchströmbare Walze aus einem im Mikrometerbereich liegenden offen-porösen Material ausgeführt ist.

Beim Transport der Folienbahn über die Walzen wird eine Luftgrenzschicht auf der Folienbahn zwischen Folienbahn und Walze eingezogen. Diese Luftpolster wirken sich negativ auf die Planlage der Folienbahn beim verstrecken der Folien im Bearbeitungsspalt aus.

Durch den Einsatz, der von außen nach innen luftdurchströmbaren Walzen kann die miteingezogene Luft kontinuierlich über die luftdurchströmbare Walze nach innen in die Walze abströmen und die Folie liegt direkt über ihre ganze Breite an den Walzen an. Die Planlage der Folienbahn wird verbessert. Diese Luftpolster entstehen gerade bei hohen Maschinengeschwindigkeiten.

Einer Quereinschnürung durch das verstrecken der Folienbahn mit gleichzeitigem Randaufbau wird durch das Anliegen der Folie an der Walze ebenfalls entgegengewirkt und verringert.

Reicht dieser Effekt nicht aus, kann an die von außen nach innen luftdurchströmbare Walze eine Unterdruckquelle angeschlossen werden, durch den Unterdruck wird die Folienbahn an die Walze angesaugt und haftet stärker an dieser und reduziert das Neck-in und den Randausbau.

Das Maß für Neck-in und Randaufbau hängt mit u.a. der Haftung der Folie auf den Walzen, die den Bearbeitungsspalt begrenzen zusammen. Die Folie rutsch verstärkt in den Außenbereichen in Querrichtung, d.h. senkrecht zur Transportrichtung der Folienbahn über die Walzenoberfläche und versucht so, die auf sie wirkenden Querkräfte auszugleichen. Diese Quereinschnürung findet im Wesentlichen im Bearbeitungsspalt und auf den Walzen selbst statt.

Ziel ist es nun den Unterdruck an den Walzen so einzustellen, das die Haftung der Folienbahn an der Walze durch die erhöhte Reibung verbessert wird und die Relativgeschwindigkeit in Quer- und Längsrichtung zwischen Folie und Walze verhindert wird. Es wird ein gleichmäßiger Kontakt der Folie auf der Walze über die Liegebreite erreicht. Es liegt so eine definierte Ablösekante der Folienbahn von der Walze in Folientransportrichtung am Auslauf der Walze vor, wie auch eine definierte Anlegekante der Folienbahn an der Walze in Folientransportrichtung beim Einlauf auf die Walze.

Die Höhe des Unterdruckes hängt auch von der gewünschten Längenänderung der Folienbahn, der Maschinengeschwindigkeit und der Folieneigenschaften ab.

Die Kraft, mit der die Folie an die Walze gesaugt wird, erfolgt über die Höhe des Unterdrucks. Dieser liegt bei ca. 100 bis 300 mbar, in Sonderfällen kann er auch größer oder kleiner gewählt werden. Je nach Eigenschaft der Folie und der gewünschten Längenänderung wird der Unterdruck entsprechend reguliert. Erfindungsgemäß ist mindestens eine der Walzen, die den Bearbeitungsspalt der Vorrichtung zur Längenänderung begrenzen als von außen nach innen luftdurchströmbare Walze ausgebildet.

In einer bevorzugten Ausführungsform ist die zweite Walze nach dem Bearbeitungsspalt als luftdurchströmte Walze ausgeführt.

Die eingezogene Luft strömt durch die Walze ab und die Folie liegt über ihrer ganzen Breite auf der Walze auf.

Reicht der Effekt nicht aus, wird in einer weiteren Ausführungsform der Erfindung, die luftdurchströmte Walze an eine Unterdruckquelle angeschlossen.

Durch den Unterdruck, der an der luftdurchströmbaren Walze anliegt, wird die Folienbahn an die Walze angesaugt. Dadurch wird die Reibung der Folienbahn zu der Walze der Vorrichtung erhöht und reduziert so den Querschrumpf nach dem Bearbeitungsspalt. Dabei wird die Folie über ihre ganze Breite einschließlich der Folienränder gleichmäßig an die Walze gesaugt.

In einer anderen Ausführungsform der Erfindung ist die erste Walze der Vorrichtung vor dem Bearbeitungsspalt als luftdurchströmte Walze ausgeführt. Es wird der Kontakt zwischen der Folienbahn und der Walze erhöht und verhindert die Bildung von Luftpolstern zwischen diesen. Die Folienbahn liegt damit gleichmäßig auf der Walze an. Die Folienbahn erreicht mit geringerer Quereinschnürung den Bearbeitungsspalt. Es wird die Planlage positiv beeinflusst. Diese Walze kann in einer weiteren Ausführungsform ebenfalls an eine Unterdruckquelle angeschlossen werden. Durch die höheren Kräfte werden die Effekte verstärkt.

In einer weiteren Ausführungsform werden die Walze vor und die Walze nach dem Bearbeitungsspalt als luftdurchströmbare Walze ausgeführt. So wird eine bessere Haftung der Folienbahn ohne Lufteinschlüsse zwischen Folienbahn und den Walzen erreicht und der Neck-in und der Randaufbau an der Folie wird reduziert. In einer bevorzugten Ausführungsform wird die zweite Walze zusätzlich an eine Unterdruckquelle angeschlossen. Dies wirkt der Quereinschnürung entgegen. In seltenen Fällen können auch beide Walzen an eine Unterdruckquelle angeschlossen werden.

In der erfindungsgemäßen Vorrichtung können die luftdurchströmten Walzen mit und ohne Auflegewalzen zusammenwirken. Die Auflegewalzen dienen zur zusätzlichen Fixierung der Folienbahn auf den luftdurchströmten Walzen. Sie erhöhen den Kontakt von der Folie zur Walze, damit die Folie gleichmäßig an der Walze anliegt.

Je nach Streckaufgabe kann es auch erforderlich sein, die Folie über Ihre Breite unterschiedlich stark an die luftdurchströmbare Walze anzusaugen, beispielsweise an den Rändern stärker als zur Folienmitte hin. Dann wird die luftdurchströmbare Walze so ausgeführt, dass über ihre axiale Länge ein unterschiedlich starker Unterdruck anlegbar ist.

Je nach Aufgabenstellung kann auch eine Kombination aus luftdurchströmbarer Walze und Temperierwalze zum Einsatz kommen. Diese temperiert zum einen die Folienbahn, damit die passende Temperatur für die Längenänderung vorliegt, zum anderen kann die zwischen Folienbahn und Walze mit eingezogene Luft über die luftdurchströmbare Walze nach innen abströmen. Durch den direkten Kontakt der Folienbahn auf der Walze verbessert sich auch der Wärmeübergang von der Walze zur Folienbahn. Wird zusätzlich ein Unterdruck an die Walzen angelegt um die Folienbahn stärker an die Walze anzusaugen, erhöht sich die Reibung zwischen Folie und Walze und der Neck-In verringert sich weiter.

Die Temperierung kann ein Heizen oder Kühlen sein. Auf einer Seite der kombinierten Walzen wird über eine Drehdurchführung das Fluid wie Gas, Dampf, Wasser oder Öl für die Temperierung der Walze zu- und abgeführt. Über eine Drehdurchführung wird auf der Gegenseite der Fluidzu- und abführung eine Unterdruckquelle angeschlossen und die Luft abgesaugt. Wird kein Unterdruck angelegt, entweicht die Luft über diese Öffnungen. Bei einer reinen luftdurchströmbaren Walze entfällt die Fluidzu- und abführung für die Temperierung.

Die kombinierte Temperier- und luftdurchströmte Walze besteht, wie die Walzen nach dem Stand der Technik, ebenfalls aus einer fluidtemperierten Doppelmantelwalze, sie ist aber zusätzlich mit Kanälen zur Luftführung ausgestattet und kann an eine Unterdruckquelle angeschlossen werden. Die Kanäle können auch als kleine Bohrungen ausgeführt sein.

Idealerweise wird eine luftdurchlässige Schicht aufgebracht, ähnlich einer Sinterstruktur. Es ist auch möglich die Walzen aus einem offen-porösen Material auszuführen, die im Mikrometerbereich liegen. Die Walzen sind aus Materialien wie Stahl, Edelstahl oder Kunststoff ausgeführt. In einer bevorzugten Ausführungsform ist die Sinterschicht beispielsweise aus rostfreiem Edelstahl, welcher auch hochglanzpoliert werden kann. Zusätzlich kann über die Oberflächenrauhigkeit oder die Oberflächenstruktur der Walzen die Reibung bzw. Haftung zwischen Folienbahn und Walze beeinflusst werden

Ist eine Temperierung nicht notwendig, werden Walzen gleicher Art ohne Doppelmantel eingesetzt.

Durch die Reduzierung des Querschrumpfes der Folienbahn ergeben sich neue physikalische Eigenschaften der Folie, die zu einer besseren Weiterverarbeitung in Druckwerken und Laminationsprozessen durch eine bessere Planlage führen. Des Weiteren führt dies zu weniger Randbeschnitt.

Die Vorrichtung zur Längenänderung umfasst Bearbeitungsspalte, die jeweils von zwei Walzen begrenzt werden. Die in Folienbahntransportrichtung erste Walze weist eine erste Umfangsgeschwindigkeit auf und die in Folienbahntransportrichtung zweite Walze weist eine zweite Umfangsgeschwindigkeit auf, damit die Folienbahn im Bearbeitungsspalt dazwischen eine Längenänderung erfährt.

Im Fall, dass die zweite Walze eine größere Umfangsgeschwindigkeit aufweist als die erste Walze der Vorrichtung ergibt sich eine positive Längenänderung der Folie. Je nach Längenänderungsverhältnis spricht man von Recken, Verstrecken oder Annealing. Der Übergang der Folienlängenänderung vom Annealen zum Verstrecken und zum Recken ist fließend.

Es können Längenänderungsverhältnisse von ca. 1:1 bis 1:10 erreicht werden.

Im Fall des Annealings kann neben dem Längen auch ein Schrumpfen der Folienbahn zugelassen werden, dann weist die zweite Walze eine geringere Umfangsgeschwindigkeit auf als die erste Walze und es ergibt sich eine negative Längenänderung.

Das Schrumpfverhältnis liegt üblicherweise bei ca. 0,5:1 bis 1:1.

Es können auch beide Walzen die den Behandlungsspalt begrenzen, die gleiche Umfangsgeschwindigkeit aufweisen.

Eine eingangs genannte Reckanlage ist erfindungsgemäß dadurch gekennzeichnet, dass ein Bestandteil der Reckanlage die oben und nachfolgend beschriebene Vorrichtung zur Längenänderung einer Folienbahn ist.

In einer Ausführungsform ist die erfindungsgemäße Vorrichtung zur Längenänderung einer Folienbahn Bestandteil einer Reckanlage.

In Reckanlagen, die in der Regel aus einer Heizwalzen-, Reckwalzen-, Anealingwalzen- und Kühlwalzenanordnung bestehen, wird die Reckwalze nach dem Reckspalt bzw. Behandlungsspalt durch eine luftdurchströmbaren Walze ersetzt, da sich hier die größte Verbesserung für den Reckprozess ergibt.

Eine eingangs genannte Blasfolienanlage ist erfindungsgemäß dadurch gekennzeichnet, dass die oben und nachfolgend beschriebene Vorrichtung zur Längenänderung einer Folienbahn inline in der Blasfolienanlage angeordnet ist.

Derartige Reckanlagen können inline oder offline in einer Folienherstellungsanlage eingesetzt werden.

Es können auch mehrere erfindungsgemäße Vorrichtungen, die mindestens einen von zwei Walzen begrenzten Bearbeitungsspalt umfassen in einer Reckanlage vorgesehen sein.

Es ist aber auch möglich in Reckanlagen mit der erfindungsgemäßen Vorrichtung weitere Reckwalzen oder weitere Walzen wie die den Reckwalzen folgenden Annealingwalzen und Kühlwalzen wie auch die vorgeschalteten Heizwalzen zusätzlich als luftdurchströmbare Walzen auszuführen um die Folienqualität weiter zu verbessern.

Bei der Herstellung von Schlauchfolien kann die erfindungsgemäße Vorrichtung zur Längenänderung einer Folienbahn inline in einer Blasfolienanlage eingebaut werden.

Blasfolienanlagen umfassen, in Folientransportrichtung gesehen, eine Kunststoffdosiervorrichtung, einen Extruder, gefolgt vom Folienblaskopf und einer Kühlung sowie einen Kalibrierkorb. Dem schließt sich eine Flachlegung und eine Abzugsvorrichtung sowie eine Wendevorrichtung an. Schließlich wird die Schlauchfolie in einem Wickler aufgewickelt.

Bei der Herstellung von Schlauchfolien in Blasfolienanlagen kann die erfindungsgemäße Vorrichtung zur Längenänderung mit mindestens einem von zwei Walzen begrenztem Bearbeitungsspalt, wobei mindestens eine der Walzen eine luftdurchströmbaren Walze ist, direkt in Folientransportrichtung oberhalb des Abzugswalzenpaares der Abzugsvorrichtung vor oder nach den Wendestangen angeordnet sein. Es können auch mehrere erfindungsgemäße Vorrichtungen, die mindestens einen von zwei Walzen begrenzten Bearbeitungsspalt umfassen in einer Blasfolienanlage vorgesehen sein.

Sie können zusätzlich mit weiteren luftdurchströmbaren Walzen kombiniert werden. Hierbei kann der Abzug stehend, rotierend oder als reversierender Wendeabzug ausgeführt sein. Es kann auch ohne Wendestangen gefahren werden.

Die erfindungsgemäße Vorrichtung zur monoaxialen Längenänderung kann als Bestandteil einer Reckanlage in einer Blasfolienanlage in Folientransportrichtung oberhalb des Abzugswalzenpaares vor oder nach den Wendestangen oben über der Schlauchfolienblase angeordnet sein.

Alternativ kann die Vorrichtung in einer Reckanlage auch inline auf dem Boden neben der Blasfolienanlage oder offline auf dem Boden neben der Blasfolienanlage angeordnet sein. Die Blasfolienanlage kann auch jeweils mit oder ohne reversierenden Wendeabzug ausgeführt sein.

Die erfindungsgemäße Vorrichtung zur monoaxialen Längenänderung kann als Bestandteil einer Reckanlage einer sogenannten MDO-Anlage auch zweifach nach einer Folienblasanlage inline angeordnet sein. Dann wird die Schlauchfolie beidseitig an gegenüberliegenden Stellen in zwei Folienbahnen aufgeschnitten und je eine Folienbahn in einer Reckanlage weiterverarbeitet.

Um die Qualität von Folienbahnen weiter zu optimieren kann der Einsatz der erfindungsgemäßen Vorrichtung und der Einsatz von Dickenregelungssystemen kombiniert werden. Beim kombinierten Einsatz von Dickenregelungssystemen bei der Herstellung von Schlauchfolien z.B. nach der DE 10 2009 033 171 A1 und luftdurchströmten Walzen in der Vorrichtung zur Längenänderung tritt ein weiterer positiver Effekt ein, denn bei geringerem Neck-In der Folienbahn durch das Recken muss weniger Energie in das Regelungssystem eingebracht werden, um die Planlage zu optimieren, es ist eine fein dosierte Regelung möglich und somit wird der Prozess vereinfacht.

Ebenfalls kann die Vorrichtung zur Längenänderung in einer Reck- oder Annealinganlage zur Behandlung von Cast-Folien eingesetzt werden.

In einem eingangs genannten erfindungsgemäßen Verfahren zur monoaxialen Längenänderung von Folienbahnen, wird die Folienbahn über mindestens einen von zwei Walzen begrenzten Bearbeitungsspalt geführt. Dabei weist die in Folientransportrichtung erste Walze eine erste Umfangsgeschwindigkeit auf und die in Folientransportrichtung zweite Walze eine zweite Umfangsgeschwindigkeit auf. Mindestens eine dieser Walzen ist eine luftdurchströmte Walze, diese sorgt dafür, dass die über sie geführte Folienbahn an ihr anliegt, um einer Quereinschnürung und einem Randaufbau der Folienbahn entgegenzuwirken und die Bildung von Luftpolstern zwischen Walzen und Folienbahn zu verhindern. Dabei ist an die luftdurchströmbare Walze eine Unterdruckquelle anschließbar und die Walze ist mit Unterdruck beaufschlagbar, wobei die luftdurchströmbare Walze aus einem im Mikrometerbereich liegenden offen-porösen Material ausgeführt ist.

Bei einer Kombination aus luftdurchströmter und temperierter Walze wird zusätzlich der Wärmeübergang zwischen Folie und Walze erhöht, da die isolierende Luftschicht dazwischen durch die luftdurchströmbare Walze abströmen kann. Es wird somit ein stabiler Reckprozess erreicht und in der Folge eine homogenere Folie ohne Planlagefehler, da die Folie gleichmäßiger über ihre Liegebreite auf der Walze anliegt.

Durch Anlegen von Unterdruck wird der Effekt verstärkt. Es kann zum einen die Ablösekante der Folie von der Walze in Folientransportrichtung am Auslauf der Walze, zum anderen die Anlegekante der Folie an die Walze in Folientransportrichtung am Einlauf der Walze durch ansaugen besser fixiert werden, sodass ein geringerer Relativgeschwindigkeitsunterschied in Quer- und Längsrichtung über die Liegebreite zwischen Folie und Walze eintritt.

Zur weiteren Optimierung der Folienbahnqualität wird das Verfahren mit einer Foliendickenregelung kombiniert wie sie in der DE 10 2009 033 171 A1 beschrieben ist. Hierbei wird eine Schlauchfolie während ihrer Herstellung in einer Blasfolienanlage einer Foliendickenregelung unterzogen, wobei das Dickenprofil der Schlauchfolie so geregelt wird, dass die Schlauchfolie Dünnstellen an jenen Stellen aufweist, die in einer nachgeschalteten inline betriebenen Reckanlage die Randbereiche der flachgelegten Schlauchfolien darstellen, sodass nach dem Recken der Folie in einer Reckanlage eine Folie mit möglichst geringen Abweichungen von der mittleren Foliendicke über die Folienbreite entsteht. Wird jetzt die Folienbahn beim Recken in der Reckanlage zusätzlich in der Vorrichtung zur Längenänderung über eine luftdurchströmbare Walze mit Unterdruckquelle geführt, die die Folie ansaugt und so einer Quereinschnürung und Randaufbau vermeidet, werden Folien mit weiter erhöhter Qualität hergestellt. Durch anlegen eine Unterdruckquelle an die luftdurchströmte Walze wird die Qualität weiter verbessert. Die flachgelegte Schlauchfolie kann eine verblockte Folie, eine einseitig oder beidseitig, eine doppeltflachgelegte Schlauchfolie sein oder eine einlagig in zwei Reckanlagen verarbeitete Folie sein.

Der Einsatz einer durchströmbaren Walze mit und ohne Anschluss an eine Unterdruckquelle als Walze, speziell als Reckwalze, erhöht die Haftung der Folienbahn an der Walze und führt so zu einer geringeren Quereinschnürung sowie einen geringeren Randaufbau der Folienbahn und somit einer verbesserten Planlage der Folie. Somit wird der bisher notwendige Randabfall vermindert. Beides erhöht die Wirtschaftlichkeit bei der Produktion gereckter Folien.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der -beispielhaft- ein bevorzugtes Ausführungsbeispiel der Erfindung dargestellt ist.

In den Zeichnungen zeigt:
Figur 1 eine Reckanlage mit der erfindungsgemäßen Vorrichtung zur monoaxialen Längenänderung eine Folienbahn in Maschinenrichtung und
Figur 2 die Vorrichtung zur monoaxialen Längenänderung eine Folienbahn in Maschinenrichtung

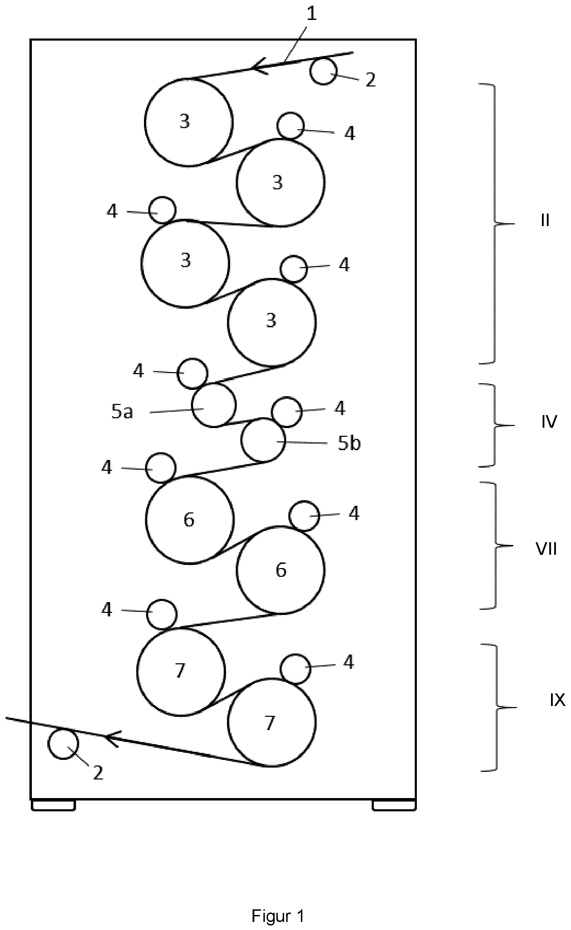

Die Figur 1 zeigt die erfindungsgemäße Vorrichtung zur monoaxialen Längenänderung einer Folienbahn in Maschinenrichtung in einer Reckanlage, auch MDO-Anlage genannt, als eine Anwendungsmöglichkeit der erfindungsgemäßen Vorrichtung.

Die Folienbahn (1) wird von oben in die Reckanlage eingeführt. Zunächst wird sie über eine Heizstrecke (II) mit Heizwalzen (3) geführt. Danach wird die Folienbahn (1) der erfindungsgemäßen Vorrichtung zur Längenänderung ( IV), hier der Reckvorrichtung, mit den Walzen (5a, 5b), hier den Reckwalzen und dazwischenliegendem Bearbeitungsspalt, hier der Reckspalt zugeführt und verstreckt. Die Reckwalzen (5a, 5b) können einen kleineren Durchmesser als die Heizwalzen aufweisen. Im Anschluss wird die Folienbahn (1) einer Annealingstrecke ( VII) mit Annealingwalzen ( 6) zum temperieren zugeführt, gefolgt von einer Kühlstrecke (IX) mit Kühlwalzen (9). Schließlich verlässt die Folie (1) die MDO-Anlage und kann im Wickler aufgewickelt werden. Auf den unterschiedlichen Walzen wird die Folienbahn mittels Auflegewalzen (4) gehalten.

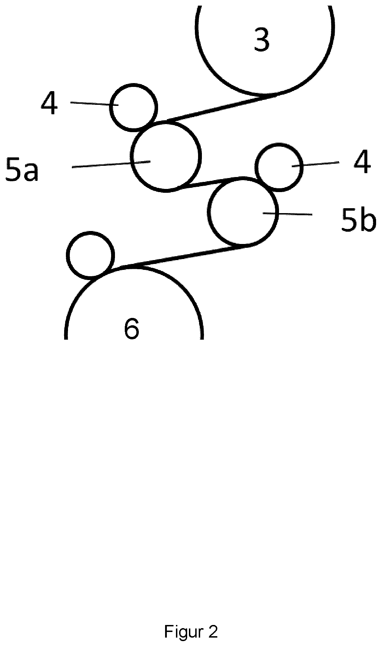

Die Figur 2 zeigt die Vorrichtung zur Längenänderung (IV) der Reckanlage im Detail. Die Folienbahn (1) wird über eine erste Reckwalze (5a) zur zweiten Reckwalze (5b) geführt. Zwischen der Reckwalzen (5a) und (5b) befindet sich der Reckspalt. In dieser Reckanlage weist die 2 Reckwalze (5b) eine höhere Umfangsgeschwindigkeit auf als die erste Reckwalze (5a) sodass sich eine positive Längenänderung der Folienbahn ergibt. Die Auflegewalzen (4) dienen zur zusätzlichen Fixierung der Folienbahn (1) auf den Reckwalzen (5a) und (5b).

Danach verlässt die Folienbahn (1) die erfindungsgemäße Vorrichtung (IV). Die Reckwalze (5b) ist erfindungsgemäß als luftdurchströmte Walze mit der Möglichkeit zum Anschließen an eine Unterdruckquelle ausgeführt, hier nicht dargestellt. Die Reckwalze (5a) und die Reckwalze (5b) können auch zusätzlich als Temperierwalzen ausgeführt sein. Dann ist die Reckwalze (5b) eine Kombination aus luftdurchströmter Walze und Temperierwalze.

Je nach Reckaufgabe können einzelne oder alle Auflegewalzen (4) entfallen.

Reckanlagen können auch mehr als zwei Reckwalzen (5) aufweisen und somit mehrere Vorrichtungen (IV) besitzen.

Die Reckanlage kann jeweils 2, 3 oder mehr Heiz-, Reck-, Annealing- oder Kühlwalzen aufweisen.

### Bezugszeichenliste

- 1: Folienbahn
- 3: Heizwalzen
- 4: Auflegewalzen
- 5: Walzen / Reckwalzen
- 5a: erste Walze / Reckwalze
- 5b: zweiten Reckwalze / Walze
- 6: Annealingwalzen
- 7: Kühlwalzen

- II: Heizstrecke
- IV: Vorrichtung zur Längenänderung / Reckvorrichtung
- VII: Annealingstrecke
- IX: Kühlstrecke

## Patentansprüche

1. Vorrichtung (IV) zur monoaxialen Längenänderung von Folienbahnen (1) in Maschinenrichtung, umfassend:
mindestens einen von zwei Walzen (5a, 5b) begrenzten Bearbeitungsspalt über den eine Folienbahn (1) in Maschinenrichtung geführt wird,
wobei die in Folientransportrichtung erste Walze (5a) eine erste Umfangsgeschwindigkeit aufweist und die in Folientransportrichtung zweite Walze (5b) eine zweite Umfangsgeschwindigkeit aufweist, wobei mindestens eine der Walzen (5a, 5b) eine von außen nach innen luftdurchströmbare Walze (5a, 5b) ist,
**dadurch gekennzeichnet, dass**
an die luftdurchströmbare Walze (5a, 5b) eine Unterdruckquelle anschließbar ist und die Walze (5a, 5b) mit Unterdruck beaufschlagbar ist,
wobei die luftdurchströmbare Walze (5a, 5b) aus einem im Mikrometerbereich liegenden offen-porösen Material ausgeführt ist.

2. Vorrichtung (IV) nach Anspruch 1, **dadurch gekennzeichnet, dass** die luftdurchströmbare Walze (5a, 5b) über Ihre Länge unterschiedlich stark mit Unterdruck beaufschlagbar ist.

3. Vorrichtung (IV) nach Anspruch 1 oder 2, **dadurch gekennzeichnet, dass** mindestens eine der luftdurchströmbaren Walzen (5a, 5b) mit einer Temperierung kombinierbar ist.

4. Vorrichtung (IV) nach Anspruch 1, 2 oder 3, **dadurch gekennzeichnet, dass** die in Folientransportrichtung erste Walze (5a) eine kleinere Umfangsgeschwindigkeit aufweist als die in Folientransportrichtung zweite Walze (5b) und die Längenänderung der Folienbahn (1) eine positive Längenänderung ist.

5. Vorrichtung (IV) nach Anspruch 1, 2 oder 3, **dadurch gekennzeichnet, dass** die in Folientransportrichtung erste Walze (5a) eine größere Umfangsgeschwindigkeit aufweist als die in Folientransportrichtung der Folienbahn (1) zweite Walze (5b) und die Längenänderung der Folienbahn eine negative Längenänderung ist.

6. Reckanlage, **dadurch gekennzeichnet, dass**
ein Bestandteil der Reckanlage die Vorrichtung (IV) nach einem der Ansprüche 1 bis 5 ist.

7. Reckanlage nach Anspruch 6, **dadurch gekennzeichnet, dass**
weitere Walzen der Reckanlage als luftdurchströmbare Walzen mit und ohne anliegender Unterdruckquelle ausgeführt sind.

8. Blasfolienanlage zur Herstellung von Schlauchfolien, **dadurch gekennzeichnet, dass** die Vorrichtung (IV) nach einem der Ansprüche 1 bis 5 inline in der Blasfolienanlage angeordnet ist.

9. Blasfolienanlage nach Anspruch 8, **dadurch gekennzeichnet, dass** die Vorrichtung (IV) nach einem der Ansprüche 1 bis 5 in Folientransportrichtung nach dem Abzugswalzenpaar und vor oder nach Wendestangen der Blasfolienanlage angeordnet ist.

10. Blasfolienanlage nach Anspruch 8 oder 9, **dadurch gekennzeichnet, dass** die Blasfolienanlage mehrere Vorrichtungen (IV) nach einem der Ansprüche 1 bis 5 aufweist.

11. Blasfolienanlage nach einem der Ansprüche 8 bis 10, **dadurch gekennzeichnet, dass**
die Vorrichtung (IV) nach einem der Ansprüche 1 bis 5 in einer inline in der Blasfolienanlage angeordneten Reckanlagenlage, insbesondere nach einem der Ansprüche 6 oder 7 in der Blasfolienanlage angeordnet ist

12. Verfahren zur monoaxialen Längenänderung von Folienbahnen (1) in Maschinenrichtung, bei dem
eine Folienbahn (1) durch mindestens einen von zwei Walzen (5a, 5b) begrenzten Bearbeitungsspalt geführt wird,
wobei die in Folientransportrichtung erste Walze (5a) eine erste Umfangsgeschwindigkeit aufweist und die in Folientransportrichtung zweite Walze (5b) eine zweite Umfangsgeschwindigkeit aufweist,
wobei die Folienbahn (1) im Bearbeitungsspalt eine Längenänderung erfährt und mindestens eine der Walzen (5a, 5b) als von außen nach innen luftdurchströmte Walze (5a, 5b) ausgeführt ist wobei sich die Luft, die sich zwischen Walze (5a, 5b) und Folienbahn (1) ansammelt, durch die Walze (5a, 5b) abströmt und die Folienbahn (1) an der Walze (5a, 5b) anliegt,
**dadurch gekennzeichnet, dass**
an die luftdurchströmbare Walze (5a, 5b) eine Unterdruckquelle angeschlossen ist und die Walze (5a, 5b) mit Unterdruck beaufschlagt wird, und wobei die luftdurchströmbare Walze (5a, 5b) aus einem im Mikrometerbereich liegenden offen-porösen Material ausgeführt ist.

13. Verfahren nach Anspruch 12, **dadurch gekennzeichnet, dass**
die Folie während ihrer Herstellung in einer Blasfolienanlage einer Foliendickenregelung unterzogen wird, sodass das Foliendickenprofil der in der Blasfolienanlage hergestellten Schlauchfolie so geregelt wird, dass das vorgegebene Dicken-Sollprofil Abweichungen von einer einheitlichen Foliendicke aufweist, welche der Kompensation der Foliendickenänderung über die Folienbreite, die bei der anschließenden monoaxialen Verstreckung in Maschinenrichtung entsteht, dienen, so dass durch das Recken eine Folienbahn (1) mit einem Dickenquerprofil mit möglichst geringen Abweichungen von der mittleren Foliendicke über die gesamte Folienbreite hergestellt wird.

## Claims

1. Apparatus (IV) for monoaxially changing the length of film webs (1) in machine direction, comprising
at least one processing gap defined by two rollers (5a, 5b) over which a film web (1) is guided in machine direction,
wherein the first roller (5a) in film transport direction has a first circumferential speed and the second roller (5b) in film transport direction has a second circumferential speed,
wherein at least one of the rollers (5a, 5b) is a roller (5a, 5b) through which air can flow from the outside to the inside,
**characterised in that**
a negative pressure source can be connected to the roller (5a, 5b) through which air can flow and the roller (5a, 5b) can be subjected to negative pressure, wherein the roller (5a, 5b) through which air can flow being made of an open-porous material in the micrometre range.

2. Device (IV) according to claim 1, **characterised in that**
the roller (5a, 5b) through which air can flow can be subjected to varying degrees of negative pressure over its length.

3. Device (IV) according to claim 1 or 2, **characterised in that**
at least one of the rollers (5a, 5b) through which air can flow can be combined with temperature control.

4. Device (IV) according to claim 1, 2 or 3, **characterised in that**
the first roller (5a) in film transport direction has a lower circumferential speed than the second roller (5b) in film transport direction and the length change of the film web (1) is a positive length change.

5. Device (IV) according to claim 1, 2 or 3, **characterised in that**
the first roller (5a) in film transport direction has a greater circumferential speed than the second roller (5b) in film transport direction of the film web (1) and the length change of the film web is a negative length change.

6. Stretching system, **characterised in that**
a component of the stretching system is the device (IV) according to any one of claims 1 to 5.

7. Stretching system according to claim 6, **characterised in that**
further rollers of the stretching system are designed as rollers through which air can flow, with and without an adjacent vacuum source.

8. Blown film line for the production of tubular films, **characterised in that** the device (IV) according to any one of claims 1 to 5 is arranged inline in the blown film line.

9. A blown film line according to claim 8, **characterised in that**
the device (IV) according to any one of claims 1 to 5 is arranged in film transport direction after the pair of take-off rollers and before or after turning bars of the blown film line.

10. A blown film line according to claim 8 or 9, **characterised in that**
the blown film line comprises a plurality of devices (IV) according to any one of claims 1 to 5.

11. Blown film line according to any one of claims 8 to 10, **characterised in that** the device (IV) according to any one of claims 1 to 5 is arranged in a stretching line layer arranged inline in the blown film line, in particular according to any one of claims 6 or 7 in the blown film line

12. Method for monoaxially changing the length of film webs (1) in machine direction, in which a film web (1) is guided through at least one processing gap delimited by two rollers (5a, 5b),
wherein the first roller (5a) in film transport direction has a first circumferential speed and the second roller (5b) in film transport direction has a second circumferential speed,
wherein the film web (1) is undergoing a length change in the processing gap and at least one of the rollers (5a, 5b) is designed as a roller (5a, 5b) through which air flows from the outside to the inside, the air which accumulates between the roller (5a, 5b) and the film web (1) flowing off through the roller (5a, 5b) and the film web (1) resting against the roller (5a, 5b),
**characterised in that**
a negative pressure source is connected to the roller (5a, 5b) through which air flows and the roller (5a, 5b) is subjected to negative pressure, and
wherein the roller (5a, 5b) through which air flows is made of an open-porous material in the micrometre range.

13. Method according to claim 12, **characterised in that**
the film is subjected to a film thickness control during its production in a blown film line, so that the film thickness profile of the tubular film produced in the blown film line is controlled in such a way that the predetermined target thickness profile has deviations from a uniform film thickness, which serve to compensate for the change in film thickness over the film width which occurs during the subsequent monoaxial stretching in machine direction, so that the stretching produces a film web (1) with a transverse thickness profile with the smallest possible deviations from the average film thickness over the entire film width.

## Revendications

1. Dispositif (IV) de changement de longueur monoaxial de feuilles continues (1) dans la direction de machine, comprenant :
au moins une fente d'usinage délimitée par deux rouleaux (5a, 5b) à travers laquelle une feuille continue (1) est guidée dans la direction de machine,
dans lequel le premier rouleau (5a) dans la direction de transport de feuilles présente une première vitesse circonférentielle et le second rouleau (5b) dans la direction de transport de feuilles présente une seconde vitesse circonférentielle, dans lequel
au moins l'un des rouleaux (5a, 5b) est un rouleau (5a, 5b) pouvant être traversé par l'air de l'extérieur vers l'intérieur,
**caractérisé en ce que**
une source de dépression peut être raccordée au rouleau (5a, 5b) pouvant être traversé par l'air et le rouleau (5a, 5b) peut être soumis à une dépression,
dans lequel le rouleau (5a, 5b) pouvant être traversé par l'air est réalisé dans un matériau à porosité ouverte de l'ordre du micromètre.

2. Dispositif (IV) selon la revendication 1, **caractérisé en ce que**
le rouleau (5a, 5b) pouvant être traversé par l'air peut être soumis sur sa longueur à une dépression d'une force variable.

3. Dispositif (IV) selon la revendication 1 ou 2, **caractérisé en ce que**
au moins l'un des rouleaux (5a, 5b) pouvant être traversés par l'air peut être combiné avec une thermorégulation.

4. Dispositif (IV) selon la revendication 1, 2 ou 3, **caractérisé en ce que**
le premier rouleau (5a) dans la direction de transport de feuilles présente une vitesse circonférentielle inférieure à celle du second rouleau (5b) dans la direction de transport de feuilles et le changement de longueur de la feuille continue (1) est un changement de longueur positif.

5. Dispositif (IV) selon la revendication 1, 2 ou 3, **caractérisé en ce que**
le premier rouleau (5a) dans la direction de transport de feuilles présente une vitesse circonférentielle supérieure à celle du second rouleau (5b) dans la direction de transport de feuilles de la feuille continue (1) et le changement de longueur de la feuille continue est un changement de longueur négatif.

6. Installation d'étirage, **caractérisée en ce que**
une composante de l'installation d'étirage est le dispositif (IV) selon l'une des revendications 1 à 5.

7. Installation d'étirage selon la revendication 6, **caractérisée en ce que**
d'autres rouleaux de l'installation d'étirage sont réalisés en tant que rouleaux pouvant être traversés par l'air avec ou sans source de dépression appliquée.

8. Installation de soufflage de feuilles destinée à la fabrication de feuilles tubulaires, **caractérisée en ce que**
le dispositif (IV) selon l'une des revendications 1 à 5 est agencé en ligne dans l'installation de soufflage de feuilles.

9. Installation de soufflage de feuilles selon la revendication 8, **caractérisée en ce que**
le dispositif (IV) selon l'une des revendications 1 à 5 est agencé dans la direction de transport de feuilles après la paire de rouleaux de traction et avant ou après des tiges de retournement de l'installation de soufflage de feuilles.

10. Installation de soufflage de feuilles selon la revendication 8 ou 9, **caractérisée en ce que**
l'installation de soufflage de feuilles présente plusieurs dispositifs (IV) selon l'une des revendications 1 à 5.

11. Installation de soufflage de feuilles selon l'une des revendications 8 à 10, **caractérisée en ce que**
le dispositif (IV) selon l'une des revendications 1 à 5 est agencé dans une position d'installation d'étirage agencée en ligne dans l'installation de soufflage de feuilles, en particulier selon l'une des revendications 6 ou 7 dans l'installation de soufflage de feuilles.

12. Procédé de changement de longueur monoaxial de feuilles continues (1) dans la direction de machine, dans lequel :
une feuille continue (1) est guidée à travers au moins une fente d'usinage délimitée par deux rouleaux (5a, 5b),
dans lequel le premier rouleau (5a) dans la direction de transport de feuilles présente une première vitesse circonférentielle et le second rouleau (5b) dans la direction de transport de feuilles présente une seconde vitesse circonférentielle,
dans lequel la feuille continue (1) subit un changement de longueur dans la fente d'usinage et au moins l'un des rouleaux (5a, 5b) est exécuté en tant que rouleau (5a, 5b) traversé par l'air de l'extérieur vers l'intérieur, dans lequel l'air, qui s'accumule entre les rouleaux (5a, 5b) et la feuille continue (1), s'évacue à travers les rouleaux (5a, 5b) et la feuille continue (1) s'applique contre le rouleau (5a, 5b),
**caractérisé en ce que**
une source de dépression est raccordée au rouleau (5a, 5b) pouvant être traversé par l'air et le rouleau (5a, 5b) est soumis à une dépression,
et dans lequel le rouleau (5a, 5b) pouvant être traversé par l'air est réalisé dans un matériau à porosité ouverte de l'ordre du micromètre.

13. Procédé selon la revendication 12, **caractérisé en ce que**
pendant sa fabrication dans une installation de soufflage de feuilles, la feuille est soumise à une régulation d'épaisseur de feuille, de sorte que le profil d'épaisseur de feuille de la feuille tubulaire fabriquée dans l'installation de soufflage de feuilles soit régulée de sorte que le profil de consigne d'épaisseur prédéfini présente des écarts par rapport à une épaisseur de feuille uniforme, lesquels servent à la compensation du changement d'épaisseur de feuille sur la largeur de feuille, qui naît lors de l'allongement monoaxial ultérieur dans la direction de machine, de sorte que par l'étirage une feuille continue (1) soit fabriquée avec un profil transversal d'épaisseur avec des écarts aussi restreints que possible par rapport à l'épaisseur de feuille moyenne sur l'ensemble de l'épaisseur de feuille.
